(19) Europäisches Patentamt
European Patent Office
Office européen des brevets

(11) **EP 2 768 648 B1**

(12) # EUROPÄISCHE PATENTSCHRIFT

(45) Veröffentlichungstag und Bekanntmachung des Hinweises auf die Patenterteilung:
**21.11.2018 Patentblatt 2018/47**

(21) Anmeldenummer: **12772337.7**

(22) Anmeldetag: **16.10.2012**

(51) Int Cl.:
*B29C 43/22* *(2006.01)*     *B29C 47/00* *(2006.01)*
*B29C 47/08* *(2006.01)*     *B29C 43/46* *(2006.01)*
*B29L 7/00* *(2006.01)*

(86) Internationale Anmeldenummer:
**PCT/EP2012/070476**

(87) Internationale Veröffentlichungsnummer:
**WO 2013/057097 (25.04.2013 Gazette 2013/17)**

(54) **WALZENVORRICHTUNG ZUR BEHANDLUNG FLÄCHIGEN MATERIALS, INSBESONDERE ZUR GLÄTTUNG VON FOLIEN ODER PLATTEN, GLÄTTVORRICHTUNG UND VERFAHREN ZUR HERSTELLUNG VON FLÄCHIGEM MATERIAL, INSBESONDERE VON FOLIEN ODER PLATTEN**

ROLLER DEVICE FOR TREATING LAMINAR MATERIAL, IN PARTICULAR FOR FLATTENING FILMS OR BOARDS, FLATTENING DEVICE AND METHOD FOR PRODUCING LAMINAR MATERIAL, IN PARTICULAR FILMS OR BOARDS

DISPOSITIF DE LAMINAGE POUR LE TRAITEMENT DE MATÉRIAUX PLATS, NOTAMMENT POUR L'APLANISSEMENT DE FEUILLES OU DE PLAQUES, DISPOSITIF D'APLANISSEMENT ET PROCÉDÉ DE FABRICATION DE MATÉRIAUX PLATS, NOTAMMENT DE FEUILLES OU DE PLAQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2011 EP 11185770**

(43) Veröffentlichungstag der Anmeldung:
**27.08.2014 Patentblatt 2014/35**

(73) Patentinhaber: **Covestro Deutschland AG**
**51373 Leverkusen (DE)**

(72) Erfinder:
• **FLECKE, Jürgen**
**41542 Dormagen (DE)**
• **PAULUS, Alexander**
**41539 Dormagen (DE)**
• **NICKEL, Jörg**
**41539 Dormagen (DE)**
• **WEISTROFFER, Andreas**
**51373 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 0 828 599      EP-A1- 1 340 608**
**WO-A1-2006/098939     DE-A1- 4 343 864**
**US-B1- 6 250 904**

EP 2 768 648 B1

## Beschreibung

Die vorliegende Erfindung betrifft eine Walzenvorrichtung zur Behandlung flächigen Materials, insbesondere zur Glättung von Folien oder Platten, umfassend eine erste Walzeneinheit und eine zweite Walzeneinheit, wobei jede Walzeneinheit umfasst wenigstens einen Antriebsmotor mit einem Motorträgheitsmoment $J_M$, eine Walze mit einem Walzenträgheitsmoment $J_W$, und wenigstens ein Getriebe zur kinematischen Kopplung der Walze an den wenigstens einen Antriebsmotor mit einem Übersetzungsverhältnis $i_{MW}$ zwischen dem wenigstens einen Antriebsmotor und der Walze, wobei die Walze der zweiten Walzeneinheit zur Walze der ersten Walzeneinheit gegenläufig rotierbar ist und wobei zwischen der Walze der ersten Walzeneinheit und der Walze der zweiten Walzeneinheit ein erster Walzenspalt gebildet ist, durch welchen das flächige Material geführt wird. Ferner betrifft die vorliegende Erfindung ein Verfahren zur Herstellung von flächigem Material, insbesondere von Folien oder Platten.

Die Herstellung hochwertiger Kunststofffolien, beispielsweise aus Polycarbonat, durch Extrusion und anschließende Glättung des extrudierten Schmelzefilms in einem Glättwerk unter Einsatz temperierter Glättwalzen ist seit Jahren industrieller Standard. Insbesondere bei hochwertigen Folien mit glänzender Oberfläche machen sich periodische Störungen der Folienoberfläche - so genannte Rattermarken -, die insbesondere bei dickeren Folien mit einer Dicke von beispielsweise 300 - 3000 μm auftreten, negativ bemerkbar und beeinträchtigen ihren optischen Qualitätseindruck. Je nach Anlagenkonfiguration und Betriebsweise ist die Ausprägung dieser Störungen unterschiedlich. Ursache dieser Störungen sind Ungleichmäßigkeiten im Ablöse- und Prägeverhalten während des Prozesses im Glättwerk, die auf einen unzureichenden Gleichlauf der in dem Glättwerk eingesetzten Walzeneinheiten zurückzuführen ist.

In der WO 2006/098939 A1 ist eine Walze-zu-Walze-Mikroreplikationsvorrichtung beschrieben, bei der ein bahnförmiges Material beidseitig mit einem flüssigen Material beschichtet wird, welches auf dem bahnförmigen Material aushärtet. Die Mikroreplikationsvorrichtung umfasst eine erste profilierte Walze mit einem ersten Durchmesser, eine zweite profilierte Walze mit einem zweiten Durchmesser und eine Antriebsanordnung, die zum Drehen der ersten profilierten Walze und der zweiten profilierten Walze derart konfiguriert ist, dass die erste und zweite Walze eine kontinuierliche Registrierung innerhalb von 100 Mikrometern beibehalten, wobei der zweite Durchmesser 0,01 bis 1 Prozent größer als der erste Durchmesser ist.

In der US 6,250,904 B1 ist eine Extrusionsvorrichtung zur Erzeugung von Folienbahnen beschrieben, bei der auf der Oberfläche der produzierten Folienbahnen auftretende Defekte, wie Wellen oder Rattermarken, reduziert werden sollen. Dies soll durch ein Regelsystem für die Umfangsgeschwindigkeit der schleppenden Walze erreicht werden, mit welchem sich Geschwindigkeitsschwankungen reduzieren lassen.

Die EP 0 828 599 A1 betrifft ein Verfahren zur Herstellung einer amorphen eingefärbten Platte, beispielsweise aus Polymethylmethacrylat, Polycarbonat oder Polyvinylchlorid. Gemäß dem Verfahren wird zunächst ein kristallisierbarer Thermoplast zusammen mit dem Farbmittel in einem Extruder aufgeschmolzen, anschließend die Schmelze durch eine Düse ausgeformt und weiter im Glättwerk mit mindestens zwei Walzen kalibriert, geglättet und gekühlt, bevor die Platte auf Maß gebracht wird, wobei die erste Walze des Glättwerkes eine Temperatur im Bereich von 50°C bis 80°C aufweist. Um Defekte und Dickenschwankungen auf der Oberfläche der Platten zu vermeiden, wird betont, dass die Geschwindigkeit des Abzugs mit der Geschwindigkeit der eingesetzten Kalanderwalzen genau abgestimmt sein sollte.

In der DE 4343 864 A1 ist ein Verfahren zur Vermeidung von Rattermarken beim Glätten von plattenförmigen Extrudaten aus thermoplastischem Kunststoff beschrieben. Im Einzelnen sieht das Verfahren den Einsatz eines zumindest ein Glättwerkswalzenpaar aufweisenden Glättwerks vor, wobei das Glättwerk mit einem Glättwerksantrieb mit einem Zahnradgetriebe sowie einem elektromagnetischen Antriebsregler ausgerüstet ist und der Abtrieb des Zahnradgetriebes auf zumindest eine der Glättwalzen des Glättwalzenpaares arbeitet. Gemäß dem Verfahren wird die der Rotation des Abtriebes überlagerte Zahnfrequenz des Zahnradgetriebes gemessen, mit Hilfe eines Frequenzgenerators eine der Zahnfrequenz möglichst nahekommende Aufschaltfrequenz erzeugt, und schließlich die Aufschaltfrequenz dem Antriebsregler aufgeschaltet.

In der EP 1 340 608 A1 wird vorgeschlagen, in einer Glättvorrichtung den Antriebsmotor einer Glättwalze mit koaxial zueinander angeordneten Rotor und Stator zu versehen und ohne Zwischenschaltung eines Getriebes, d.h. mit einem Übersetzungsverhältnis $i_{MW} = 1$, an die Antriebswelle der Glättwalze anzuschließen. In der Praxis hat sich jedoch herausgestellt, dass eine solche Anlagenauslegung nicht ausreichend ist, um Rattermarken auf hochwertigen Folienoberflächen sicher zu vermeiden. Ferner stehen Motoren, die einem solchen Drehzahl- und Momentenbereich operieren nicht zur Verfügung.

Eine Aufgabe der Erfindung besteht daher darin, eine Walzenvorrichtung zur Behandlung flächigen Materials, insbesondere zur Glättung von Folien oder Platten, der eingangs genannten Art anzugeben, welche die oben erwähnten Nachteile vermeidet und bei der Behandlung flächigen Materials optimale Oberflächeneigenschaften, insbesondere eine optimale Glattheit und Glanz von Kunststofffolien, sicherstellt.

Die Aufgabe wird erfindungsgemäß mit einer Walzenvorrichtung nach dem Oberbegriff des Patentanspruchs 1 dadurch gelöst, dass bei wenigstens einer der ersten und der zweiten Walzeneinheit das Trägheitsmomenten-Drehzahlverhältnis zwischen Antriebsmotor und Walze $M_{MW} \leq 6$ ist und das Übersetzungsverhältnis $1 < i_{MW} \leq 40$ gewählt ist, wobei gilt $M_{MW} = \frac{J_M}{J_W} \cdot i_{MW}{}^2$ mit $i_{MW} = \left(\frac{n_M}{n_W}\right)$ mit $n_M$: Drehzahl des Antriebsmotors und $n_W$: Drehzahl der Walze.

Wie Untersuchungen der Anmelderin ergeben haben, ermöglichen gerade die Kombination der erfindungsgemäß gewählten Bereiche für das Trägheitsmomenten-Drehzahlverhältnis zwischen Antriebsmotor und Walze und das Übersetzungsverhältnis des Getriebes ein besonders hohes Maß an Walzengleichlauf jeder Walzeneinheit, was Voraussetzung für eine optimale Oberflächenqualität auch bei anspruchsvollen Folienoberflächen insbesondere im Sinne einer Reduktion bzw. Vermeidung von Rattermarken ist.

In der im Internet verfügbaren Technischen Anleitung Nummer 7 "Dimensionierung eines Antriebssystems", ABB Automation Products GmbH, Mannheim (www.abb-drives.de) wird ein Trägheitsmomenten-Drehzahlverhältnis zwischen Antriebsmotor und angetriebenem Bauteil von 1 vorgeschlagen. Allerdings wurde hier nicht der Zusammenhang zum Übersetzungsverhältnis des eingesetzten Getriebes erkannt.

Bei der vorliegenden Erfindung wird für das Übersetzungsverhältnis $i_{MW}$ bevorzugt ein Bereich von $5 \leq i_{MW} \leq 40$, speziell $10 \leq i_{MW} \leq 40$ und besonders bevorzugt $20 \leq i_{MW} \leq 40$ gewählt.

Als "flächig" im Sinne der vorliegenden Erfindung wird solches Material bezeichnet, dessen Dickenausdehnung deutlich, insbesondere um Größenordnungen, geringer ist als die Ausdehnung in Länge und Breite.

Besonders bevorzugt im Sinne einer weiter verbesserten Oberflächenqualität ist, wenn bei der ersten und der zweiten Walzeneinheit das Drehzahlverhältnis zwischen dem wenigstens einen Antriebsmotor und der Walze $M_{MW} \leq 6$ ist und das Übersetzungsverhältnis $1 < i_{MW} \leq 40$ gewählt ist.

Nach einer weiteren vorteilhaften Ausgestaltung der Erfindung ist der wenigstens eine Antriebsmotor wenigstens einer der ersten und der zweiten Walzeneinheit drehzahlgeregelt. Eine Drehzahlregelung des Antriebsmotors ist technisch ohne größeren Aufwand möglich und trägt zu einer weiteren Verbesserung des Gleichlaufverhaltens der Walzeneinheit bei.

Der wenigstens eine Antriebsmotor wenigstens einer der ersten und der zweiten Walzeneinheit ist bevorzugt ein Elektromotor. Dabei kann er als Gleichstrommotor oder auch als Wechselstrommotor ausgebildet sein. Nach einer vorteilhaften Ausgestaltung der Erfindung ist der Antriebsmotor als Drehstrom-Elektromotor mit Frequenzumrichtung ausgebildet. Hierdurch ist eine exakte Einstellung und Regelung der Motordrehzahl möglich. Dabei ist der Antriebsmotor bevorzugt als Synchronmotor ausgebildet, welcher systembedingt einen besonders hohen Gleichlauf gewährleistet. Um den Gleichlauf eines solchen Synchronmotors weiter zu steigern, kann ferner vorgesehen sein, dass dieser vielpolig, insbesondere 10-polig, ausgebildet ist.

Insbesondere bei geringeren Drehzahlen beeinträchtigen sogenannte Rastmomente ("Cogging Torque") das Gleichlaufverhalten von Elektromotoren. Zur Kompensation dieser Rastmomente ist nach einer weiteren Ausgestaltung der Erfindung vorgesehen, dass der wenigstens eine Antriebsmotor wenigstens einer der ersten und der zweiten Walzeneinheit eine Kompensationseinheit zum Ausgleich der Rastmomente umfasst. Eine solche Kompensationseinheit kann unterschiedlich ausgeführt sein. Bevorzugt ist sie als ein Softwaremodul in der Steuerung des Antriebsmotors ausgebildet.

Weitere Verbesserungen ergeben sich, wenn der wenigstens eine Antriebsmotor wenigstens einer der ersten und der zweiten Walzeneinheit über eine starre Kupplung an das wenigstens eine Getriebe gekoppelt ist und/oder die Walze wenigstens einer der ersten und der zweiten Walzeneinheit über eine starre, d.h. schlupffreie Kupplung an das wenigstens eine Getriebe gekoppelt ist. Die starre Kopplung von Antrieb und Last erweist sich als notwendig für eine Regelung von Walzenmomenten oder -umfangsgeschwindigkeiten.

Nach einer weiteren vorteilhaften Ausgestaltung der Erfindung ist das Getriebe wenigstens einer der ersten und der zweiten Walzeneinheit als Planetengetriebe, insbesondere als nicht spielfreies Planetengetriebe, ausgebildet. Wie Untersuchungen der Anmelderin überraschend gezeigt haben, lassen sich besonders gute Gleichlaufeigenschaften bei starrer Kopplung zwischen Antriebsmotor, Getriebe und Walze gerade nicht durch eine Spielfreiheit im Getriebe erreichen. Ein spielfreies Getriebe ist nämlich mit dem Nachteil verbunden, eigene Unruhe in das System durch das Abrollen der ineinander verspannten Zahnräder zu erzeugen.

Nach einer weiteren vorteilhaften Ausgestaltung der Erfindung umfasst die Walzenvorrichtung eine Steuereinheit zur Steuerung des wenigstens einen Antriebsmotors der ersten Walzeneinheit und des wenigstens einen Antriebsmotors der zweiten Walzeneinheit, wobei die Steuereinheit derart konfiguriert ist, dass das Moment und/oder die Umfangsgeschwindigkeit der Walze der ersten Walzeneinheit und der Walze der zweiten Walzeneinheit jeweils derart geregelt werden, dass jeweils eine Walze mittels des durch den Walzenspalt geführten flächigen Materials an die jeweils andere Walze koppelt. Durch diese Art der Regelung, bei der die Umfangsgeschwindigkeit stets die Regelgröße darstellt, können also bezogen auf eine der Walzen schleppende und geschleppte Zustände als Kopplung unter den Walzen definiert eingestellt werden, was sich in Untersuchungen der Anmelderin insbesondere bei der Glättung von Kunststofffolien oder -platten als besonders wirksam in Bezug auf die angestrebte Vermeidung von Rattermarken herausgestellt hat. Es wird vermutet, dass durch die schleppenden oder geschleppten Zustände Scherkräfte im Material der Folien bzw. Platten wirken, so dass die Oberfläche eine besonders gleichmäßige optische Erscheinung erhält und insbesondere keine Rattermarken mehr erkennbar sind. Die schleppenden oder geschleppten Zustände zwischen den Walzen können durch definierte von 1 geringfügig - beispielsweise im Promill-Bereich - abweichende Verhältnisse der Walzenmomente oder der Umfangsgeschwindigkeiten eingestellt und über die Umfangsgeschwindigkeit als Regelgröße erhalten werden.

Nach einer die Erfindung weiterbildenden Ausgestaltung umfasst die Walzenvorrichtung eine dritte Walzeneinheit, wobei zwischen der Walze der ersten Walzeneinheit und der Walze der dritten Walzeneinheit ein zweiter Walzenspalt gebildet ist, durch welchen das flächige Material nach Verlassen des ersten Walzenspalts weiter geführt wird. Speziell können die jeweiligen Achsen der Walze der ersten Walzeneinheit, der Walze der zweiten Walzeneinheit und der Walze der dritten Walzeneinheit im Wesentlichen in einer beliebig ausgerichteten, bevorzugt aber horizontalen Ebene angeordnet sein, wobei das flächige Material nach Verlassen des ersten Walzenspaltes an der Umfangsfläche der Walze der ersten Walzeneinheit zum zweiten Walzenspalt geführt wird. Ebenso möglich ist es, insbesondere die Achsen der dritten Walzeneinheit aus der Ebene herauszuschwenken, um die Umschlingung der Walze der ersten Walzeneinheit zu variieren. Im Falle der Glättung von Kunststofffolien kann eine solche Glättung besonders effektiv durch zwei unmittelbar aufeinander folgende Walzenspalte erreicht werden.

Ein weiterer Aspekt der vorliegenden Erfindung betrifft eine Glättvorrichtung zur Glättung von Folien oder Platten mit einer Walzenvorrichtung nach einem der Ansprüche 1 bis 13. Zu den Vorteilen einer solchen Glättvorrichtung wird auf das Vorstehende verwiesen.

Ein weiterer Aspekt der vorliegenden Erfindung betrifft ein Verfahren gemäß Patentanspruch 15 zur Herstellung von flächigem Material, insbesondere von Folien oder Platten, mit folgenden Schritten:

- Erzeugung eines Schmelzefilms des flächigen Materials, insbesondere durch Extrusion,
- Glättung des Schmelzefilms in einem ersten Walzenspalt zwischen einer Walze einer ersten Walzeneinheit mit einem Walzenträgheitsmoment $J_{W1}$ und einer Walze einer zweiten Walzeneinheit mit einem Walzenträgheitsmoment $J_{W2}$,

wobei die Walze der ersten Walzeneinheit und die Walze der zweite Walzeneinheit jeweils über wenigstens ein Getriebe an wenigstens einen Antriebsmotor mit einem Motorträgheitsmoment $J_{M1,M2}$ gekoppelt sind, wobei das Verfahren dadurch gekennzeichnet ist, dass bei der Walze wenigstens einer Walzeneinheit das Trägheitsmomenten-Drehzahlverhältnis zwischen Antriebsmotor und Walze $M_{MW} \leq 6$ beträgt und das Übersetzungsverhältnis $1 < i_{MW} \leq 40$ beträgt,

$$\text{wobei gilt } M_{MW} = \frac{J_M}{J_W} \cdot i_{MW}^{\,2} \text{ mit } i_{MW} = \left(\frac{n_M}{n_W}\right) \text{ mit } n_M\text{: Drehzahl des Antriebsmotors und } n_W\text{: Drehzahl der Walze.}$$

Zu den Vorteilen des erfindungsgemäßen Verfahrens wird wiederum auf das Vorstehende verwiesen.

Im Folgenden wird die Erfindung anhand eines ein Ausführungsbeispiel darstellenden Zeichnung näher erläutert. Es zeigt:

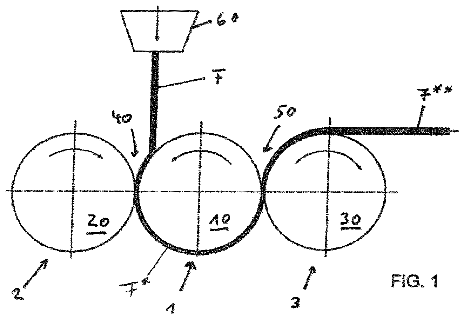

Fig. 1   zeigt eine Glättvorrichtung zur Glättung von Folien oder Platten, speziell von unmittelbar zuvor extrudierten Schmelzefilmen.

Die in einer stark schematisierten Schnittzeichnung dargestellte Glättvorrichtung der Fig. 1 umfasst insgesamt drei Walzeneinheiten 1,2,3, die jeweils einen Antriebsmotor mit einem Motorträgheitsmoment $J_{M1,M2M,3}$, eine temperierte Walze 10,20.30 mit einem Walzenträgheitsmoment $J_{W1,W2,W3}$, und ein Getriebe zur kinematischen Kopplung der jeweiligen Walze 10,20,30 an den zugeordneten Antriebsmotor mit einem Übersetzungsverhältnis $i_{MW1,MW2,MW3}$ zwischen dem Antriebsmotor und der Walze 10,20,30 umfassen. Dabei ist die Walze 20 der zweiten Walzeneinheit 2 zur Walze 10 der ersten Walzeneinheit 1 gegenläufig rotierbar. Ebenso ist die Walze 30 der dritten Walzeneinheit 3 zur Walze 10 der ersten Walzeneinheit gegenläufig rotierbar. Zwischen der Walze 10 der ersten Walzeneinheit 1 und der Walze 20 der zweiten Walzeneinheit 2 ist ein erster Walzenspalt 40 gebildet. Ferner ist zwischen der Walze 10 der ersten Walzeneinheit 1 und der Walze 30 der dritten Walzeneinheit 3 ein zweiter Walzenspalt 50 gebildet, wobei der zu glättende Schmelzefilm zunächst den ersten Walzenspalt und anschließend den zweiten Walzenspalt durchläuft, wie weiter unten noch im Detail erläutert wird.

Vorliegend ist bei den drei Walzeneinheiten das Trägheitsmomenten-Drehzahlverhältnis zwischen dem wenigstens einen Antriebsmotor und der Walze $M_{MWi} \leq 6$ gewählt und das Übersetzungsverhältnis ist $1 \leq i_{MWi} \leq 40$ gewählt,

$$\text{wobei gilt } M_{MW} = \frac{J_M}{J_W} \cdot i_{MW}^{\,2} \; M_{MW} \text{ mit } i_{MW} = \left(\frac{n_M}{n_W}\right) \text{ mit } n_M\text{: Drehzahl des Antriebsmotors und } n_W\text{: Drehzahl der}$$

Walze und Walzenindex i = 1, 2, 3.

Bevorzugt wird für das Übersetzungsverhältnis $i_{MW}$ ein Bereich von $5 \leq i_{MW} \leq 40$, speziell $10 \leq i_{MW} \leq 40$ und besonders bevorzugt $20 \leq i_{MW} \leq 40$ gewählt.

Durch die Wahl dieser Parameter wird bei den Walzen ein besonders hohes Maß an Gleichlauf erzielt, wodurch die Oberflächenqualität der geglätteten Folie entscheidend verbessert wird. Insbesondere kann die Sichtbarkeit von Rattermarken sehr stark reduziert oder sogar vollständig unterdrückt werden.

Die dargestellte Zeichnung der Glättvorrichtung zeigt die drei Walzen 10,20,30 der drei Walzeneinheiten 1,2,3 in Schnittansicht. Dementsprechend sind hierbei das Getriebe, welches vorliegend in bekannter Weise unmittelbar an einen Wellenzapfen gekoppelt ist, und der Antriebsmotor, welcher seinerseits an die Getriebeeingangswelle gekoppelt ist, nicht dargestellt. Es ist dabei möglich, an beide Wellenzapfen einer jeden Walze jeweils ein Getriebe und einen Antriebsmotor zu koppeln. Vorliegend ist jeder Antriebsmotor an das ihm zugeordnete Getriebe über eine starre Kupplung gekoppelt. Ebenso ist jedes Getriebe an die Welle der ihm zugeordnete Walze 10,20,30 über eine starre Kupplung gekoppelt. Dabei sind die Getriebe jeweils als nicht spielfreie Planetengetriebe ausgebildet.

Vorliegend sind die die Walzen 10,20,30 antreibenden Elektromotoren als Drehstrom-Elektromotor mit Frequenzumrichtung, speziell als Synchronmotoren ausgebildet. Hierdurch ist eine exakte Einstellung und Regelung der Motordrehzahl bei optimalen Gleichlaufeigenschaften möglich. Um den Gleichlauf eines solchen Synchronmotors weiter zu steigern, ist ferner vorgesehen, dass die Motoren vielpolig, insbesondere 10-polig, ausgebildet sind. Eine gemeinsame Steuereinheit (nicht dargestellt) ermöglicht eine gemeinsame Steuerung und Regelung der Antriebsmotoren. Weiterhin umfasst jeder der Antriebsmotoren der Walzeneinheiten 1,2,3 eine Kompensationseinheit zum Ausgleich der Rastmomente, die vorliegend jeweils als ein Softwaremodul in der Steuereinheit der Antriebsmotoren ausgebildet ist.

Die Betriebsweise der Glättvorrichtung ist die folgende:

In einer nicht dargestellten Extrusionseinheit wird eine Schmelze aus z.B. Polycarbonat in einem Verteilerwerkzeug 60 (Düse) mit einer Dicke von typischerweise 500 bis 1200 μm erzeugt und als Schmelzefilm F in Richtung der unterhalb des Verteilwerkzeugs in einer Horizontalebene angeordneten Walzen 10,20,30 geleitet und dort geglättet. Dort tritt der Schmelzefilm F in den zwischen der Walze 10 der ersten Walzeneinheit 1 und der Walze 20 der zweiten Walzeneinheit 2 gebildeten Walzenspalt 40 ein. Wie dargestellt, rotieren die Walzen 1,2 gegenläufig und ziehen dabei den Schmelzefilm F in den Walzenspalt 40 hinein. Nach Austritt aus dem Walzenspalt 40 wird die Folienbahn F* an der Unterseite der Anordnung der Walzen 1,2,3 etwa um einen Winkel von 180° um die Walze 1 herumgeführt und tritt von unten in den zweiten Walzenspalt 50, welcher zwischen der Walze 1 und der gegenläufig zur Walze 1 rotierenden Walze 3 gebildet ist, ein, wo er weiter geglättet wird. Nach Austritt aus dem zweiten Walzenspalt 50 wird die geglättete Folienbahn F* noch etwa um einen Winkel von beispielsweise 90° um die Walze 3 herumgeführt und dann als fertig geglättete Folienbahn F** abgezogen.

Um die Glättung der Folienbahn zu optimieren und die Bildung von Rattermarken möglichst vollständig zu unterdrücken, ist die Steuereinheit der Antriebsmotoren der Walzen 1,2,3 vorliegend derart konfiguriert, dass das Moment und/oder die Umfangsgeschwindigkeit der Walzen 1,2,3 jeweils derart geregelt werden, dass jeweils eine Walze mittels des durch den Walzenspalt geführten flächigen Materials die jeweils andere Walze schleppt. Vorliegend dient die Walze 1 bezüglich Moment und Umfangsgeschwindigkeit als Leitwalze.

Beispiel:

In einer Glättvorrichtung der vorstehend beschriebenen Art zur Glättung von Polycarbonatfolien wurden drei Walzeneinheiten mit folgenden Parametern betrieben:

| | |
|---|---|
| Motorleistung: | 4,49 kW |
| Motormoment: | 23,6 Nm |
| Motordrehzahl: | 2000 min$^{-1}$ |
| Motorträgheitsmoment $J_M$: | 65 kgcm$^2$ |
| Übersetzungsverhältnis $i_{MW}$: | 35,34 |
| Walzenmoment: | 834,02 Nm |
| Walzendrehzahl: | 56,59 min$^{-1}$ |
| Trägheitsmomenten-Drehzahlverhältnis $M_{MW}$: | 4,91 |

Bei diesen Einstellungen waren auf der fertig geglätteten Polycarbonatfolie keine Rattermarken mehr erkennbar.

Vergleichsbeispiel:

In einer Glättvorrichtung der vorstehend beschriebenen Art zur Glättung von Polycarbonatfolien wurden drei Walzeneinheiten mit folgenden Parametern betrieben:

| | |
|---|---|
| Motorleistung: | 1,48 kW |
| Motormoment: | 2,35 Nm |
| Motordrehzahl: | 6000 min$^{-1}$ |
| Motorträgheitsmoment $J_M$: | 1,5 kgcm$^2$ |
| Übersetzungsverhältnis $i_{MW}$: | 125,6 |
| Walzenmoment: | 443,37 Nm |
| Walzendrehzahl: | 47,77 min$^{-1}$ |
| Trägheitsmomenten-Drehzahlverhältnis $M_{MW}$: | 16,83 |

Hier waren auf der Oberfläche der fertig geglätteten Polycarbonatfolie deutliche Rattermarken erkennbar.

**Patentansprüche**

1.   Walzenvorrichtung zur Behandlung flächigen Materials (F), insbesondere zur Glättung von Folien (F*) oder Platten, umfassend eine erste Walzeneinheit (1) und eine zweite Walzeneinheit (2) wobei jede Walzeneinheit (1,2) umfasst:

   - wenigstens einen Antriebsmotor mit einem Motorträgheitsmoment $J_M$,
   - eine Walze (10,20) mit einem Walzenträgheitsmoment $J_W$, und
   - wenigstens ein Getriebe zur kinematischen Kopplung der Walze (10,20) an den wenigstens einen Antriebsmotor mit einem Übersetzungsverhältnis $i_{MW}$ zwischen dem wenigstens einen Antriebsmotor und der Walze (10,20),

   wobei die Walze (20) der zweiten Walzeneinheit (2) zur Walze (10) der ersten Walzeneinheit (1) gegenläufig rotierbar ist und wobei zwischen der Walze (10) der ersten Walzeneinheit (1) und der Walze (20) der zweiten Walzeneinheit (2) ein erster Walzenspalt (40) gebildet ist, durch welchen das flächige Material (F) geführt wird, **dadurch gekennzeichnet, dass** bei wenigstens einer der ersten und der zweiten Walzeneinheit (1,2) das Trägheitsmomenten-Drehzahlverhältnis zwischen dem wenigstens einen Antriebsmotor und der Walze (10,20) $M_{MW} \leq 6$ ist und das Übersetzungsverhältnis $1 < i_{MW} \leq 40$ gewählt ist,

   wobei gilt $M_{MW} = \frac{J_M}{J_W} \cdot i_{MW}{}^2$ mit $i_{MW} = \left(\frac{n_M}{n_W}\right)$

   mit $n_M$: Drehzahl des Antriebsmotors und $n_W$: Drehzahl der Walze (10,20).

2.   Walzenvorrichtung nach Anspruch 1, **dadurch gekennzeichnet, dass** als Übersetzungsverhältnis $5 < i_{MW} \leq 40$, speziell $10 \leq i_{MW} \leq 40$ und besonders bevorzugt $20 \leq i_{MW} \leq 40$ gewählt ist.

3.   Walzenvorrichtung nach Anspruch 1 oder 2, **dadurch gekennzeichnet, dass** bei der ersten und der zweiten Walzeneinheit (1,2) das Drehzahlverhältnis zwischen dem wenigstens einen Antriebsmotor und der Walze (10,20) $M_{MW} \leq 6$ ist und das Übersetzungsverhältnis $1 < i_{MW} \leq 40$ gewählt ist.

4.   Walzenvorrichtung nach einem der Ansprüche 1 bis 3, **dadurch gekennzeichnet, dass** der wenigstens eine Antriebsmotor wenigstens einer der ersten und der zweiten Walzeneinheit (1,2) drehzahlgeregelt ist.

5.   Walzenvorrichtung nach einem der Ansprüche 1 bis 4, **dadurch gekennzeichnet, dass**

der wenigstens eine Antriebsmotor wenigstens einer der ersten und der zweiten Walzeneinheit (1,2) ein Drehstrom-Elektromotor mit Frequenzumrichtung ist.

6. Walzenvorrichtung nach Anspruch 5,
**dadurch gekennzeichnet, dass**
der wenigstens eine Antriebsmotor wenigstens einer der ersten und der zweiten Walzeneinheit (1,2) ein Synchronmotor ist.

7. Walzenvorrichtung nach Anspruch 6,
**dadurch gekennzeichnet, dass**
der Synchronmotor vielpolig, insbesondere 10-polig, ausgebildet ist.

8. Walzenvorrichtung nach einem der Ansprüche 5 bis 7,
**dadurch gekennzeichnet, dass**
der wenigstens eine Antriebsmotor wenigstens einer der ersten und der zweiten Walzeneinheit (1,2) eine Kompensationseinheit zum Ausgleich der Rastmomente umfasst.

9. Walzenvorrichtung nach einem der Ansprüche 1 bis 8,
**dadurch gekennzeichnet, dass**
der wenigstens eine Antriebsmotor wenigstens einer der ersten und der zweiten Walzeneinheit (1,2) und/oder die Walze wenigstens einer der ersten und der zweiten Walzeneinheit (1,2) über eine starre Kupplung an das wenigstens eine Getriebe gekoppelt ist.

10. Walzenvorrichtung nach einem der Ansprüche 1 bis 9,
**dadurch gekennzeichnet, dass**
das wenigstens eine Getriebe wenigstens einer der ersten und der zweiten Walzeneinheit (1,2) als Planetengetriebe, insbesondere als nicht spielfreies Planetengetriebe, ausgebildet ist.

11. Walzenvorrichtung nach einem der Ansprüche 1 bis 10,
**dadurch gekennzeichnet, dass**
die Walzenvorrichtung eine Steuereinheit zur Steuerung des wenigstens einen Antriebsmotors der ersten Walzeneinheit (1) und des wenigstens einen Antriebsmotors der zweiten Walzeneinheit (2) umfasst, wobei die Steuereinheit derart konfiguriert ist, dass das Moment und/oder die Umfangsgeschwindigkeit der Walze (10) der ersten Walzeneinheit (1) und der Walze (20) der zweiten Walzeneinheit (2) jeweils derart geregelt werden, dass jeweils eine Walze (10,20) mittels des durch den Walzenspalt (40) geführten flächigen Materials (F) an die jeweils andere Walze (20, 10) koppelt.

12. Walzenvorrichtung nach einem der Ansprüche 1 bis 11,
**dadurch gekennzeichnet, dass**
die Walzenvorrichtung eine dritte Walzeneinheit (3) umfasst, wobei zwischen der Walze (10) der ersten Walzeneinheit (1) und der Walze (30) der dritten Walzeneinheit (3) ein zweiter Walzenspalt (50) gebildet ist, durch welchen das flächige Material (F) nach Verlassen des ersten Walzenspalts (40) weiter geführt wird.

13. Walzenvorrichtung nach Anspruch 12,
**dadurch gekennzeichnet, dass**
die jeweiligen Achsen der Walze (10) der ersten Walzeneinheit (1), der Walze (20) der zweiten Walzeneinheit (2) und der Walze (30) der dritten Walzeneinheit (3) im Wesentlichen in einer Ebene angeordnet sind, wobei das flächige Material (F) nach Verlassen des ersten Walzenspaltes (40) an der Umfangsfläche der Walze (10) der ersten Walzeneinheit (1) zum zweiten Walzenspalt (50) geführt wird.

14. Glättvorrichtung zur Glättung von Folien oder Platten mit einer Walzenvorrichtung nach einem der Ansprüche 1 bis 13.

15. Verfahren zur Herstellung von flächigem Material, insbesondere von Folien oder Platten, mit folgenden Schritten:

- Erzeugung eines Schmelzefilms des flächigen Materials (F), insbesondere durch Extrusion,
- Glättung des Schmelzefilms in einem ersten Walzenspalt (40) zwischen einer Walze (10) einer ersten Walzeneinheit (1) mit einem Walzenträgheitsmoment $J_{W1}$ und einer Walze (20) einer zweiten Walzeneinheit (2) mit einem Walzenträgheitsmoment $J_{W2}$,

wobei die Walze (10) der ersten Walzeneinheit (1) und die Walze (20) der zweite Walzeneinheit (2) jeweils über wenigstens ein Getriebe an wenigstens einen Antriebsmotor mit einem Motorträgheitsmoment $J_{M1,M2}$ gekoppelt sind,

**dadurch gekennzeichnet, dass**

bei der Walze (10,20) wenigstens einer Walzeneinheit (1,2) das Trägheitsmomenten-Drehzahlverhältnis zwischen Antriebsmotor und Walze $M_{MW} \leq 6$ beträgt und das Übersetzungsverhältnis $1 < i_{MW} \leq 40$ beträgt,

wobei gilt $M_{MW} = \frac{J_M}{J_W} \cdot i_{MW}^2$ mit $i_{MW} = \left(\frac{n_M}{n_W}\right)$

mit $n_M$: Drehzahl des Antriebsmotors und $n_W$: Drehzahl der Walze (10, 20).

## Claims

1. Roller device for treating sheet-form material (F), in particular for smoothing films (F\*) or sheets, comprising a first roller unit (1) and a second roller unit (2), wherein each roller unit (1, 2) comprises:

   - at least one drive motor with a motor moment of inertia $J_M$,
   - a roller (10, 20) with a roller moment of inertia $J_W$, and
   - at least one gear for the kinematic coupling of the roller (10, 20) to the at least one drive motor with a transmission ratio $i_{MW}$ between the at least one drive motor and the roller (10, 20),

   wherein the roller (20) of the second roller unit (2) is rotatable in the opposite direction to the roller (10) of the first roller unit (1), and wherein there is formed between the roller (10) of the first roller unit (1) and the roller (20) of the second roller unit (2) a first roller gap (40) through which the sheet-form material (F) is guided,

   **characterised in that**

   in at least one of the first and second roller units (1, 2), the moment of inertia/speed ratio between the at least one drive motor and the roller (10, 20) $M_{MW}$ is $\leq 6$ and the transmission ratio $1 < i_{MW} \leq 40$ is chosen,

   wherein $M_{MW} = \frac{J_M}{J_W} \cdot i_{MW}^2$ where $i_{MW} = \left(\frac{n_M}{n_W}\right)$

   where $n_M$: speed of the drive motor and $n_W$: speed of the roller (10, 20).

2. Roller device according to claim 1,

   **characterised in that**

   there is chosen as the transmission ratio $5 < i_{MW} \leq 40$, especially $10 \leq i_{MW} \leq 40$ and in particular $20 \leq i_{MW} \leq 40$.

3. Roller device according to claim 1 or 2,

   **characterised in that**

   in the first and second roller units (1, 2), the speed ratio between the at least one drive motor and the roller (10, 20) $M_{MW}$ is $\leq 6$ and the transmission ratio $1 < i_{MW} \leq 40$ is chosen.

4. Roller device according to any one of claims 1 to 3,

   **characterised in that**

   the at least one drive motor of at least one of the first and second roller units (1, 2) is speed-controlled.

5. Roller device according to any one of claims 1 to 4,

   **characterised in that**

   the at least one drive motor of at least one of the first and second roller units (1, 2) is a three-phase electric motor with frequency conversion.

6. Roller device according to claim 5,

   **characterised in that**

   the at least one drive motor of at least one of the first and second roller units (1, 2) is a synchronous motor.

7. Roller device according to claim 6,

   **characterised in that**

   the synchronous motor is in multipolar, in particular 10-polar, form.

8. Roller device according to any one of claims 5 to 7,
**characterised in that**
the at least one drive motor of at least one of the first and second roller units (1, 2) comprises a compensation unit for compensating for the cogging torques.

9. Roller device according to any one of claims 1 to 8,
**characterised in that**
the at least one drive motor of at least one of the first and second roller units (1, 2) and/or the roller of at least one of the first and second roller units (1, 2) is coupled by way of a rigid coupling to the at least one gear.

10. Roller device according to any one of claims 1 to 9,
**characterised in that**
the at least one gear of at least one of the first and second roller units (1, 2) is in the form of a planetary gear, in particular in the form of a planetary gear that is not free from play.

11. Roller device according to any one of claims 1 to 10,
**characterised in that**
the roller device comprises a control unit for controlling the at least one drive motor of the first roller unit (1) and the at least one drive motor of the second roller unit (2), wherein the control unit is so configured that the torque and/or the peripheral speed of the roller (10) of the first roller unit (1) and of the roller (20) of the second roller unit (2) are each so controlled that one roller (10, 20) is coupled to the other roller (20, 10) by means of the sheet-form material (F) guided through the roller gap (40) .

12. Roller device according to any one of claims 1 to 11,
**characterised in that**
the roller device comprises a third roller unit (3), wherein there is formed between the roller (10) of the first roller unit (1) and the roller (30) of the third roller unit (3) a second roller gap (50) through which the sheet-form material (F) is further guided after leaving the first roller gap (40).

13. Roller device according to claim 12,
**characterised in that**
the axes of the roller (10) of the first roller unit (1), of the roller (20) of the second roller unit (2) and of the roller (30) of the third roller unit (3) are arranged substantially in a plane, wherein the sheet-form material (F), after leaving the first roller gap (40), is guided to the second roller gap (50) on the peripheral surface of the roller (10) of the first roller unit (1).

14. Smoothing device for smoothing films or sheets having a roller device according to any one of claims 1 to 13.

15. Process for the production of sheet-form material, in particular of films or sheets, having the following steps:

- production of a melt film of the sheet-form material (F), in particular by extrusion,
- smoothing of the melt film in a first roller gap (40) between a roller (10) of a first roller unit (1) with a roller moment of inertia $J_{W1}$ and a roller (20) of a second roller unit (2) with a roller moment of inertia $T_{W2}$,

wherein the roller (10) of the first roller unit (1) and the roller (20) of the second roller unit (2) are each coupled by way of at least one gear to at least one drive motor with a motor moment of inertia $J_{M1,M2}$,
**characterised in that**
in the case of the roller (10, 20) of at least one roller unit (1, 2), the moment of inertia/speed ratio between the drive motor and the roller $M_{MW}$ is $\leq 6$ and the transmission ratio is $1 < i_{MW} \leq 40$,

wherein $M_{MW} = \dfrac{J_M}{J_W} \cdot i_{MW}^{\mathbf{2}}$ where $i_{MW} = \left(\dfrac{n_M}{n_W}\right)$

where $n_M$: speed of the drive motor and $n_W$: speed of the roller (10, 20).

**Revendications**

1. Dispositif de laminage pour le traitement de matériau plat (F), en particulier pour le lissage de feuilles (F*) ou de plaques, comprenant une première unité de laminage (1) et une deuxième unité de laminage (2), chaque unité de laminage (1, 2) comprenant :

- au moins un moteur d'entraînement présentant un moment d'inertie du moteur $J_M$,
- un cylindre (10, 20) présentant un moment d'inertie de cylindre $J_W$ et
- au moins une transmission pour l'accouplement cinématique des cylindres (10, 20) audit au moins un moteur d'entraînement avec un rapport de démultiplication $i_{MW}$ entre ledit au moins un moteur d'entraînement et le cylindre (10, 20),

le cylindre (20) de la deuxième unité de laminage (2) pouvant tourner en sens opposé par rapport au cylindre (10) de la première unité de laminage (1) et une première fente de laminage (40), à travers laquelle le matériau plat (F) est guidé, étant formée entre le cylindre (10) de la première unité de laminage (1) et le cylindre (20) de la deuxième unité de laminage (2), **caractérisé en ce que** pour au moins l'une parmi la première et la deuxième unité de laminage (1, 2), le rapport moments d'inertie-vitesses de rotation entre ledit au moins un moteur d'entraînement et les cylindres (10, 20) est

$M_{mw} \leq 6$ et le rapport de démultiplication est choisi comme $1 < i_{MW} \leq 40$,

où $M_{MW} = \dfrac{J_M}{J_W} \cdot i_{MW}^{2}$  avec $i_{MW} = \left(\dfrac{n_M}{n_W}\right)$

avec $n_M$ : vitesse de rotation du moteur d'entraînement et $n_W$ : vitesse de rotation du cylindre (10, 20).

2. Dispositif de laminage selon la revendication 1, **caractérisé en ce que** qu'on choisit, comme rapport de démultiplication, $5 < i_{MW} \leq 40$, en particulier $10 \leq i_{MW} \leq 40$ et de manière particulièrement préférée $20 \leq i_{MW} \leq 40$.

3. Dispositif de laminage selon la revendication 1 ou 2, **caractérisé en ce que** pour la première et la deuxième unité de laminage (1, 2), le rapport des vitesses de rotation entre ledit au moins un moteur d'entraînement et le cylindre (10, 20) est $M_{MW} \leq 6$ et le rapport de démultiplication est choisi comme $1 < i_{MW} \leq 40$.

4. Dispositif de laminage selon l'une quelconque des revendications 1 à 3, **caractérisé en ce que** ledit au moins un moteur d'entraînement d'au moins l'une parmi la première et la deuxième unité de laminage (1, 2) est régulé en vitesse de rotation.

5. Dispositif de laminage selon l'une quelconque des revendications 1 à 4, **caractérisé en ce que** ledit au moins un moteur d'entraînement d'au moins l'une parmi la première et la deuxième unité de laminage (1, 2) est un moteur électrique triphasé avec un variateur de fréquence.

6. Dispositif de laminage selon la revendication 5, **caractérisé en ce que** ledit au moins un moteur d'entraînement d'au moins l'une parmi la première et la deuxième unité de laminage (1, 2) est un moteur synchrone.

7. Dispositif de laminage selon la revendication 6, **caractérisé en ce que** le moteur synchrone est conçu de manière multipolaire, en particulier 10-polaire.

8. Dispositif de laminage selon l'une quelconque des revendications 5 à 7, **caractérisé en ce que** ledit au moins un moteur d'entraînement d'au moins l'une parmi la première et la deuxième unité de laminage (1, 2) comprend une unité de compensation pour la compensation des couples résiduels.

9. Dispositif de laminage selon l'une quelconque des revendications 1 à 8, **caractérisé en ce que** ledit au moins un moteur d'entraînement d'au moins l'une parmi la première et la deuxième unité de laminage (1, 2) et/ou le cylindre d'au moins l'une parmi la première et la deuxième unité de laminage (1, 2) est/sont accouplé(s) à ladite au moins une transmission via un embrayage rigide.

10. Dispositif de laminage selon l'une quelconque des revendications 1 à 9, **caractérisé en ce que** ladite au moins une transmission d'au moins l'une parmi la première et la deuxième unité de laminage (1, 2) est conçue comme une transmission planétaire, en particulier comme une transmission planétaire qui n'est pas sans jeu.

11. Dispositif de laminage selon l'une quelconque des revendications 1 à 10, **caractérisé en ce que** le dispositif de laminage comprend une unité de commande pour la commande dudit au moins un moteur d'entraînement de la première unité de laminage (1) et dudit au moins un moteur d'entraînement de la deuxième unité de laminage (2), l'unité de commande étant configurée de manière telle que le couple et/ou la vitesse périphérique du cylindre (10) de la première unité de laminage (1) et du cylindre (20) de la deuxième unité de laminage (2) est/sont à chaque fois régulé(e)s de manière telle qu'à chaque fois un cylindre (10, 20) s'accouple au moyen du matériau plat (F) guidé à travers la fente de laminage (40) à l'autre cylindre (20, 10) respectif.

12. Dispositif de laminage selon l'une quelconque des revendications 1 à 11, **caractérisé en ce que** le dispositif de laminage comprend une troisième unité de laminage (3), une deuxième fente de laminage (50), à travers laquelle le matériau plat (F) est guidé plus loin après avoir quitté la première fente de laminage (40), étant formée entre le cylindre (10) de la première unité de laminage (1) et le cylindre (30) de la troisième unité de laminage (3).

13. Dispositif de laminage selon la revendication 12, **caractérisé en ce que** les axes respectifs du cylindre (10) de la première unité de laminage (1), du cylindre (20) de la deuxième unité de laminage (2) et du cylindre (30) de la troisième unité de laminage (3) sont disposés sensiblement dans un plan, le matériau plat (F) étant guidé, après avoir quitté la première fente de laminage (40), sur la surface périphérique du cylindre (10) de la première unité de laminage (1) vers la deuxième fente de laminage (50).

14. Dispositif de lissage pour le lissage de feuilles ou de plaques à l'aide d'un dispositif de laminage selon l'une quelconque des revendications 1 à 13.

15. Procédé pour la fabrication de matériau plat, en particulier de feuilles ou de plaques, présentant les étapes suivantes :

- génération d'un film de masse fondue du matériau plat (F), en particulier par extrusion,
- lissage du film en masse fondue dans une première fente de laminage (40) entre un cylindre (10) d'une première unité de laminage (1) présentant un moment d'inertie de cylindre $J_{W1}$ et un cylindre (20) d'une deuxième unité de laminage (2) présentant un moment inertie de cylindre $J_{W2}$,

le cylindre (10) de la première unité de laminage (1) et le cylindre (20) de la deuxième unité de laminage (2) étant à chaque fois accouplés via au moins une transmission à au moins un moteur d'entraînement présentant un moment d'inertie de moteur $J_{M1,M2}$, **caractérisé en ce que** pour le cylindre (10, 20) d'au moins une unité de laminage (1, 2), le rapport moments d'inertie-vitesses de rotation entre le moteur d'entraînement et le cylindre vaut $M_{MW} \leq 6$ et le rapport de démultiplication vaut $1 < i_{MW} \leq 40$,

où $M_{MW} = \frac{J_M}{J_W} \cdot i_{MW}^2$ avec $i_{MW} = \left(\frac{n_M}{n_W}\right)$

avec $n_M$ : vitesse de rotation du moteur d'entraînement et $n_W$ : vitesse de rotation du cylindre (10, 20).

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006098939 A1
- US 6250904 B1
- EP 0828599 A1
- DE 4343864 A1
- EP 1340608 A1